Europäisches Patentamt

European Patent Office

Office européen des brevets

(11) Publication number: **0 066 320**
**A2**

## EUROPEAN PATENT APPLICATION

(21) Application number: **82200586.4**

(22) Date of filing: **13.05.82**

(51) Int. Cl.³: **G 01 N 27/90**

(30) Priority: **26.05.81 GB 8115970**

(43) Date of publication of application:
**08.12.82 Bulletin 82/49**

(84) Designated Contracting States:
**AT BE CH DE FR IT LI LU NL SE**

(71) Applicant: **FLATHER BRIGHT STEELS LIMITED**
**Sheffield Road**
**Tinsley Sheffield S9 1RH(GB)**

(72) Inventor: **Bramall, Peter**
**9 Cappoquin Drive Wrockwardine Wood**
**Telford Shropshire(GB)**

(74) Representative: **Houghton, David et al,**
**Hulse & Co. Cavendish Buildings West Street**
**Sheffield, S1 1ZZ(GB)**

(54) Non-destructive testing.

(57) The invention relates to non-destructive testing particularly of bar material. It is known to test bar material utilising two coils and a common saturation with the bar passed through the coils, any detected difference in field strengths signifying the presence of a defect. However such method can only test for discontinuous defects, a continuous defect would have equal effect on the field strengths of both coils. The object of the invention is to provide for the detecting of both continuous or discontinuous defects which objective is met by apparatus comprising a search coil (4) and a reference coil (2) having substantially identical field strengths said search coil (4) being adapted to be sited in an inspection line for bar material (1) and said reference coil being adapted to be sited off line for use with a reference sample (3). Thus, with the reference sample of known quality of surface finish and chemical and physical consistency, any deviation from the readings emitted between the search coil and the reference coil signifies a defect in the bar material (1), a continuous difference signifying a continuous defect and a discontinuous difference signifying a discontinuous defect.

EP 0 066 320 A2

FIG 1.

- 1 -  TITLE

This invention relates to non-destructive testing and is particularly concerned with the non-destructive surface testing of bar material.

It is already known to test for defects in continuous bar material by passing the bar through two coils each creating a magnetic field. Thus with the search and reference coils under common magnetic saturation, the bar is continuously tested at adjacent positions, and any difference detected in the field strength signifies that there is a defect in the bar surface or a difference in chemical constitution. However, such a method can only test for a discontinuous defect or varying chemical constitution. If a defect is continuous or there is an incorrect composition that is continuous, the field strengths of both coils remain the same, and a continuous defect goes undetected.

Other methods of surface defect detection are not suitable for testing continuous bar of relatively small cross-section. Thus, eddy current dynamic probe methods are normally only used on relatively large cross-sections and cannot accommodate complex section shapes, and in older coil crack detectors, the search and reference coils do not involve magnetic saturation, and give multi-parameter displays which cannot effectively isolate a surface defect.

The object of the invention is to provide apparatus for the continuous non-destructive testing of bar material, that is capable of effectively detecting surface defects and chemical and physical inconsistencies of a continuous or discontinuous nature.

According to the present invention, apparatus for the non-destructive testing of lengths of bar material comprises a search coil and a reference coil having substantially identical field strengths, said search coil being adapted to be sited in an inspection line for the bar material, and said reference coil being adapted to be sited off-line.

Thus, prior to the onset of testing, the fields produced by the search and reference coils are balanced, and a reference sample of a known standard of surface finish, dimensional accuracy and physical and chemical consistency is introduced into the reference coil and put under magnetic saturation. The bar under test is then passed through the search coil, and also put under magnetic saturation, and the two fields continuously monitored. Any difference between the originally balanced fields will indicate changes in inductance/resistivity under magnetic saturation between the reference sample and the bar under test thereby signifying the presence of a surface defect or a chemical or physical inconsistency in the bar under test, an intermittent difference signalling discontinuous defects, and a constant difference signalling a continuous defect.

Preferably the outputs from the search coil and the reference coil are passed to suitable signal display means such as an oscilloscope or the signal means may be fed to, e.g., a micro-processor. It is further preferred, immediately beyond the search coil to provide a demagnetising unit to demagnetise the bar material. Beyond the demagnetising unit a rejecting unit can be provided and which can be activated to reject a defective bar either manually by an operative monitoring the oscilloscope or automatically on being signalled by, e.g., a micro-processor.

To allow the apparatus of the invention to be utilised for a wide range of bar materials, and which in some instances can tolerate a greater defect level than in other instances, it is preferred to provide means to vary the sensitivity of the apparatus.

The invention therefore provides a relatively simple, relatively inexpensive, and yet highly efficient non-destructive test apparatus capable of continuously monitoring effectively signalling both discontinuous and more importantly continuous surface defects in bar material of any cross-section.

One embodiment of the invention will now be described with reference to the accompanying drawings, in which :-

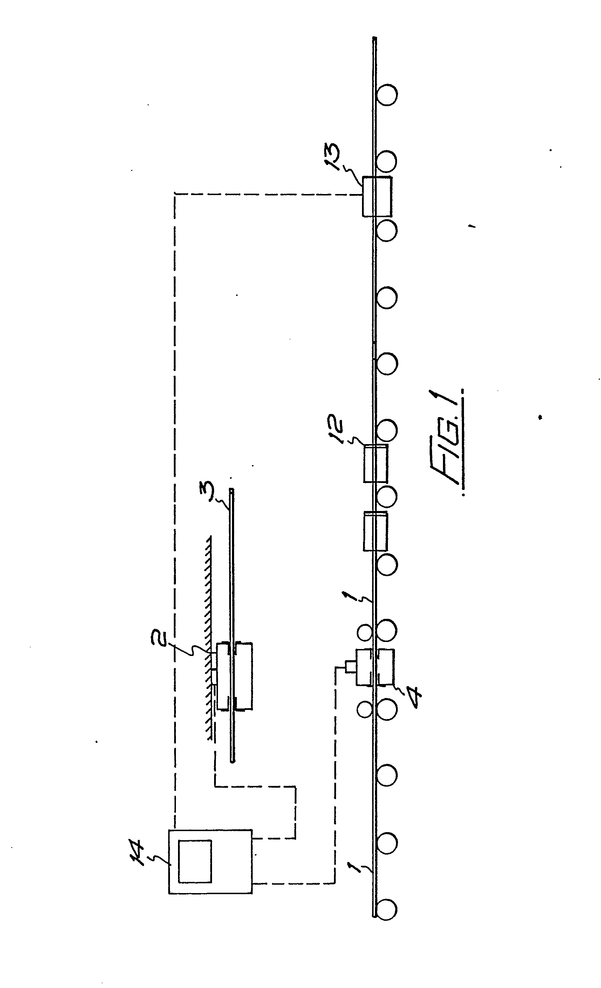

Figure 1 is a diagrammatic representation of the general lay-out of apparatus for non-destructive testing according to the invention;

Figure 2 shows to an enlarged scale and again diagrammatically the off-line reference coil of Figure 1; and

Figure 3 shows to the same scale as Figure 2 and again diagrammatically the in-line search coil of Figure 1.

In the drawings, apparatus for non-destructive testing of lengths of bar material 1 comprises an off-line reference coil 2 in which is positioned a reference sample 3 of known standard of surface finish, dimensional accuracy and physical and chemical constituency, and an in-line search coil 4 through which is successively passed a number of lengths 1 of bar material.

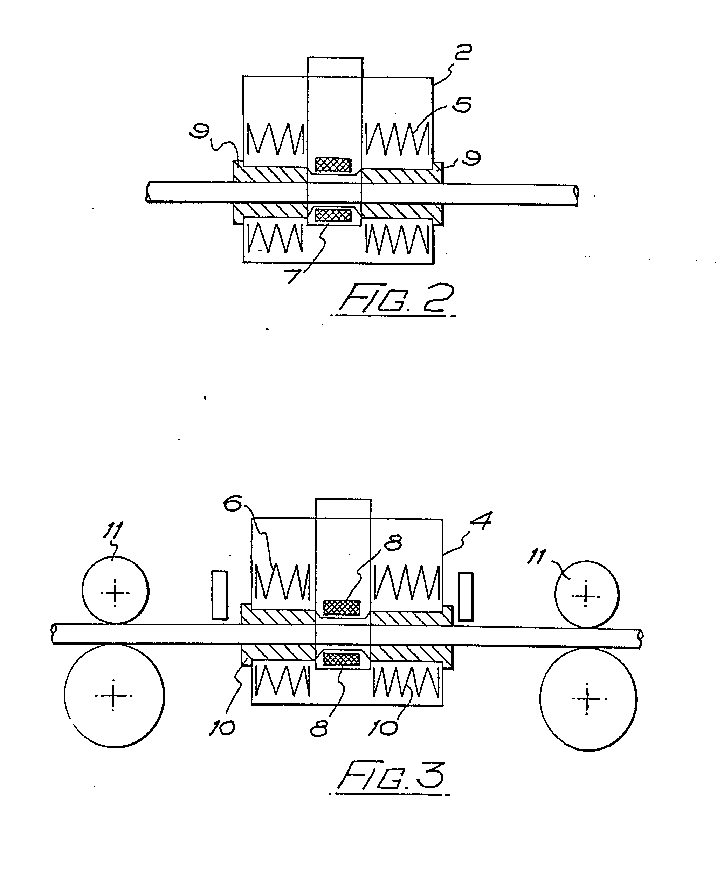

As is shown by Figures 2 and 3 both the off-line reference coil 2 and the in-line reference coil 4 are formed by water-cooled magnetic saturated windings 5, 6 respectively and an encircling input field coil and induced field coil 7, 8 respectively for the output current. In the reference coil guide bushes/pole pieces 9 are provided to locate accurately the reference sample 3 within the reference coil, and in the search coil similar guide bushes/pole pieces 10 are provided to guide accurately the bars 1 under test through the search coil. As is indicated in Figure 3 the bars 1 are passed through the search coil by a pinch roll drive system 11.

Prior to the onset of testing the fields produced by both the search and reference coils are balanced and the outputs from both coils passed either directly to an oscilloscope display or possibly via a micro-processor to an oscilloscope display. With a reference sample 3 placed in the reference coil and a bar 1 under test passed through the search coil, each are magnetically saturated, and the output current from each coil displayed on the oscilloscope. If the difference in output from each coil exceeds a pre-determined amount, this signifies that the bar 1 passing through the search coil has a defect and that defect can be detected whether or not it is continuous or discontinuous.

Immediately beyond the search coil there is provided a high frequency demagnetising unit 12 and beyond the demagnetising unit there is a rejection device 13. Thus, once a defective bar 1 has passed through the demagnetising unit, the rejecting device can be activated to push that bar from the conveyor and into a suitable receptacle. Rejection can be effected manually by stationing an operative at the oscilloscope display 14 to activate the rejection unit as and when required or when such items as a micro-processor are employed, rejection can be effected automatically.

Dependent upon the nature of the bar material under test, the sensitivity of the apparatus can be varied thereby enabling the apparatus to be applied to an exceedingly wide range of bar materials.

CLAIMS

1. Apparatus for the non-destructive testing of lengths of bar material comprising a search coil and a reference coil having substantially identical field strengths, said search coil being adapted to be sited in an inspection line for the bar material, and said reference coil being adapted to be sited off-line.

2. Apparatus as in Claim 1, wherein a demagnetising unit is provided beyond the search coil.

3. Apparatus as in Claim 1 or Claim 2, wherein a rejecting unit is provided beyond the demagnetising unit.

4. Apparatus as in any of Claims 1 to 3, wherein outputs from the search and reference coils are fed to visual display means.

5. Apparatus as in any of Claims 1 to 4, wherein outputs from the search and reference coils are fed to a micro-processor.

6. Apparatus for the non-destructive testing of lengths of bar material substantially as hereinbefore described with reference to the accompanying drawings.

_FIG.1_

_FIG. 2_

_FIG. 3_